# EUROPÄISCHE PATENTSCHRIFT

(11) **EP 0 539 705 B1**
(45) Veröffentlichungstag und Bekanntmachung des Hinweises auf die Patenterteilung: **29.01.1997**
(21) Anmeldenummer: 92115642.8
(22) Anmeldetag: 11.09.1992
(51) Int. Cl.: B60Q 11/00

(54) **Schaltungsanordnung für ein Zugfahrzeug**
Electrical circuit device for a towing vehicle
Circuit électrique pour véhicule tracteur

(30) Priorität: 28.10.1991 DE 4135546
(43) Veröffentlichungstag der Anmeldung: 05.05.1993
(73) Patentinhaber: Gebhard, Angela Barbara, 76316 Malsch (DE)
(72) Erfinder: Gebhard, Dietrich, verstorben (DE)
(74) Vertreter: Weller, Wolfgang, Dr.rer.nat.

(56) Entgegenhaltungen:
- EP-A- 0 501 014
- DE-A- 1 923 506
- DE-A- 3 724 916
- DE-A- 3 819 639
- US-A- 3 882 321

## Beschreibung

Die Erfindung betrifft eine Schaltungsanordnung für ein Zugfahrzeug eines aus dem Zugfahrzeug und einem elektrisch an das Zugfahrzeug anschließbaren Hänger bestehenden Wagenzuges, wobei das Zugfahrzeug zumindest eine Lampenüberwachungsschaltung und einen Beleuchtungsschalter zum Betreiben seiner Beleuchtungsanlage aufweist, die über die Schaltungsanordnung mit einer Beleuchtungsanlage des Hängers verbindbar ist, wobei die Lampenüberwachungsschaltung den Ausfall einer angesteuerten Lampe der Beleuchtungsanlage des Zugfahrzeuges als Fehlerzustand erkennt und diesen Fehlerzustand meldet, und wobei die Schaltungsanordnung einen Ausfall einer angesteuerten Lampe der Beleuchtungsanlage des Hängers erkennt und meldet.

Eine derartige Schaltungsanordnung ist zum einen aus der DE-A-3 819 639 und zum anderen aber auch aus der Praxis bekannt.

Bei den bekannten Schaltungsanordnungen muß ein zusätzliches Anzeigeinstrument vorgesehen sein, über welches die Schaltungsanordnung dem Fahrzeugführer den Ausfall einer Lampe der Beleuchtungsanlage des Hängers anzeigt. Zu diesen Lampen zählen beispielsweise die Rückfahrleuchte, die Bremslichter, die Nebelschlußleuchte sowie weitere Begrenzungsleuchten und die Fahrleuchten. Dementsprechend ist es erforderlich, bis zu vier zusätzliche Signallampen in dem Armaturenbrett unterzubringen.

Nebenbei sei noch bemerkt, daß die Lampen der Beleuchtungsanlage des Hängers über hochohmige Treiberschaltungen betrieben werden, um die Lampenüberwachungsschaltung des Zugfahrzeuges nicht zusätzlich zu belasten und zu einer falschen Betriebszustandsanzeige zu führen. Die Lampenüberwachungsschaltung arbeitet nämlich in der Regel so, daß sie eine veränderte Stromaufnahme einer angesteuerten bzw. eingeschalteten Lampe - bspw. durch Glühfadenbruch - als Fehler erkennt. Diesen Fehler zeigt die Lampenüberwachungsschaltung auf einem entsprechenden Anzeigegerät an, so daß der Fahrzeugführer über den Ausfall informiert ist.

Bei der bekannten Schaltungsanordnung ist also von Nachteil, daS zusätzliche Anzeigeelemente in das Armaturenbrett eingebaut werden müssen, um den Fahrzeugführer auch über den Zustand der Lampen der Beleuchtungsanlage des Hängers zu informieren.

Aus der DE-PS-40 10 765 ist eine Schaltungsanordnung bekannt, die zwischen die Blinklichtanlage eines Zugfahrzeuges und die Blinklichtanlage eines Hängers geschaltet wird. Die Schaltungsanordnung erkennt den Ausfall einer angesteuerten Lampe der Blinklichtanlage des Hängers und ruft bei Vorliegen eines solchen Ausfalles einen von dem Blinkgeber erkennbaren Fehlerzustand hervor.

Die bekannte Schaltungsanordnung wird also beim Nachrüsten eines Zugfahrzeuges auf Hängerbetrieb in das Zugfahrzeug eingebaut, damit auch ohne das Auswechseln des bisherigen Blinkgebers der Fahrzeugführer auch den Ausfall einer der Lampen der Blinklichtanlage des Hängers erkennen kann. Die in Zugfahrzeugen eingebauten Blinkgeber sind nämlich nur dazu ausgelegt, je Fahrtrichtung zwei Lampen zu treiben und beim Ausfall einer der beiden Lampen durch eine veränderte Blinkfrequenz diesen Fehlerzustand anzuzeigen.

Bei der bekannten Schaltungsanordnung werden die Lampen der Blinklichtanlage des Hängers über hochohmige Treiberschaltungen betrieben, die ihrerseits von dem Blinkgeber angesteuert werden, ohne diesen jedoch zu belasten. Wenn die bekannte Schaltungsanordnung erkennt, daß eine angesteuerte Lampe der Blinklichtanlage des Hängers ausgefallen ist - beispielsweise durch Glühfadenbruch -, so trennt sie eine der beiden Lampen der Blinklichtanlage des Zugfahrzeuges von dem Blinkgeber ab und betreibt diese so abgetrennte Lampe parallel zu der defekten Lampe über die Treiberschaltung, die bisher die nun ausgefallene und daher funktionslose Lampe der Blinklichtanlage des Hängers gespeist hatte. Im Falle eines Kurzschlusses der defekten Lampe führt dies jedoch zum vollständigen Ausfall der Beleuchtung.

Die bekannte Schaltungsanordnung weist ein Relais auf, das in den Strompfad zwischen der vorderen und der hinteren Lampe der Blinklichtanlage des Zugfahrzeuges (je Fahrtrichtungsseite) geschaltet ist. Beim Einbau der Schaltungsanordnung muß also der Strompfad von der vorderen zu der hinteren Lampe der Blinklichtanlage des Zugfahrzeuges aufgetrennt und die Schaltungsanordnung entsprechend zwischengeschaltet werden.

Weiterhin weist die bekannte Schaltungsanordnung eine Hängererkennungsschaltung auf, die an ihrem Ausgang ein Signal erzeugt, das anzeigt, ob ein Hänger elektrisch angeschlossen ist oder nicht. Dieses Ausgangssignal ist in unterschiedlicher Weise mit einem Ausgangssignal einer Fehlererkennungsschaltung verknüpft, die für das Erfassen eines Ausfalls einer angesteuerten Lampe der Blinklichtanlage des Hängers vorgesehen ist. Anhand der Verknüpfung der Signale der Fehlererkennungsschaltung, der Hängererkennungsschaltung und des Blinkgebers selbst ermittelt die bekannte Schaltungsanordnung, ob eine Lampe der Blinklichtanlage des Hängers oder eine Lampe der Blinklichtanlage des Zugfahrzeuges über die hochohmige Treiberschaltung angesteuert werden soll.

Ist eine Lampe der Blinklichtanlage des Hängers ausgefallen, so wird dem Blinkgeber sozusagen eine der Lampen der Blinklichtanlage des Zugfahrzeuges "weggenommen", so daß der Blinkgeber nur noch die andere Lampe der Blinklichtanlage des Zugfahrzeuges zu versorgen hat und folglich vermeintlich den Ausfall einer der beiden Lampen erkennt und dies durch eine veränderte Blinkfrequenz anzeigt.

Wegen der verschiedenartigen Verknüpfungen der unterschiedlichen Signale ist die bekannte Schaltungsanordnung mit einer großen Anzahl von Bauteilen versehen und schaltungstechnisch aufwendig realisiert. Auf diese Weise sind nicht nur die Material- sondern auch die Produktionskosten für die bekannte Schaltungsanordnung sehr hoch.

Auf das Nachrüsten von als Zugfahrzeug vorgesehenen Kraftfahrzeugen entweder mit einer der bekannten Schaltungsanordnung entsprechenden Schaltung, mit einem neuen Blinkgeber oder einer neuen Lampenüberwachungsschaltung, der/die drei Lampen je Fahrtrichtung betreiben und überwachen kann, kann jedoch nicht verzichtet werden, da aus Sicherheitsgründen der Fahrzeugführer auch darüber informiert sein muß, ob eine Lampe der Blinklichtanlage oder Beleuchtungsanlage des Hängers ausgefallen ist.

Eine Parallelschaltung der Lampen des Hängers zu den Lampen des Zugfahrzeuges ist darüber hinaus bei moderneren Zugfahrzeugen nicht möglich, da bei diesen die Lampen der Beleuchtungs- und Signalanlage von einer Sicherungsschaltung in Form einer Lampentestüberwachung überwacht werden. Die Lampentestüberwachung oder Lampenüberwachungsschaltung zeigt bereits bei geringen Abweichungen des Lampenstromes von dem vorgegebenen Sollwert eine Fehlfunktion an und öffnet ggf. den Lampenstromkreis. Eine Parallelschaltung von entsprechenden Lampen des Zugfahrzeuges mit Lampen des Hängers führt wegen des nun doppelt so großen Stromes dazu, daß die Sicherungsschaltung unerwünschterweise anspricht.

Hiervon ausgehend ist es Aufgabe der vorliegenden Erfindung, eine Schaltungsanordnung der eingangs genannten Art dahingehend weiterzubilden, daß die vorstehend genannten Nachteile vermieden werden. Insbesondere soll die neue Schaltungsanordnung bei geringem Bauteilbedarf einen einfachen konstruktiven Aufbau ermöglichen und leicht nachzurüsten sein.

Diese Aufgabe wird erfindungsgemäß dadurch gelöst, daß bei Vorliegen eines Ausfalles einer angesteuerten Lampe der Beleuchtungsanlage des Hängers die Schaltungsanordnung einen von der Lampenüberwachungsschaltung erkennbaren Fehlerzustand hervorruft, die Lampen der Beleuchtungsanlage des Hängers je über eine zugeordnete Treiberschaltung mit hochohmigem Eingang betrieben werden und daß die Schaltungsanordnung bei Ausfall einer angesteuerten Lampe der Beleuchtungsanlage des Hängers in die von der Lampenüberwachungsschaltung angesteuerten und mit einem Betriebsstrom versorgten entsprechenden Lampen der Beleuchtungsanlage des Zugfahrzeuges zusätzlich einen Fehlerstrom einspeist.

Die der Erfindung zugrunde liegende Aufgabe wird auf diese Weise vollkommen gelöst, weil jetzt zum einen keine zusätzlichen Anzeigeelemente in das Armaturenbrett eingebaut werden müssen, um den Fahrzeugführer über den Betriebszustand der Beleuchtungsanlage des Hängers zu informieren. Erfindungsgemäß wird dieser Fehlerzustand nämlich der Lampenüberwachungsschaltung gemeldet, die das sowieso vorgesehene Signalelement ansteuert. Beim Nachrüsten der neuen Schaltungsanordnung ist also lediglich zwischen die Beleuchtungsanlage des Zugfahrzeuges und die Beleuchtungsanlage des Hängers ein weiterer Bausatz zwischenzuschalten, Veränderungen am Armaturenbrett sind nicht erforderlich.

Weil weiter die Lampen der Beleuchtungsanlage des Zugfahrzeuges bei Ausfall einer Lampe der Beleuchtungsanlage des Hängers jetzt sowohl über einen von der Lampenüberwachungsschaltung stammenden Betriebsstrom als auch über einen von der Schaltungsanordnung zusätzlich eingespeisten Fehlerstrom betrieben werden, ist die Stromstärke des von der Lampenüberwachungsschaltung abgegebenen Betriebsstromes im Fehlerfall geringer als bei fehlerfreiem Betrieb. Durch diese schaltungstechnisch sehr einfache Maßnahme wird der von der Lampenüberwachungsschaltung abgegebene Betriebsstrom so weit reduziert, daß die Lampenüberwachungsschaltung dies als Fehlerzustand erkennt und anzeigt. Schaltungstechnisch ist diese Maßnahme insofern von Vorteil, als lediglich bei Erkennen des Ausfalls einer Lampe der Beleuchtungsanlage des Hängers ein Schalter geschlossen werden muß, der den Fehlerstrom einspeist.

In einem Ausführungsbeispiel der neuen Schaltungsanordnung ist es bevorzugt, wenn der in einer Lampe fließende Betriebsstrom und der in der selben Lampe fließende Fehlerstrom etwa die gleiche Größenordnung aufweisen.

Durch diese durch einfache Dimensionierung von Vorwiderständen o.ä. zu erreichende Maßnahme ist sichergestellt, daß der Betriebsstrom im Fehlerfall so weit reduziert wird, daß die Lampenüberwachungsschaltung auch bei ungünstiger Bauteilstreuung den Fehlerzustand sicher erkennt und meldet.

Ferner ist es bevorzugt, wenn die Schaltungsanordnung eine Fehlererkennungsschaltung aufweist, die bei mit der Schaltungsanordnung verbundener Beleuchtungsanlage des Hängers den Ausfall einer Lampe der Beleuchtungsanlage erkennt und ein Schaltorgan betätigt, das den Fehlerstrom einspeist.

Bei dieser Maßnahme ist von Vorteil, daß lediglich pro Fahrtrichtungsseite eine Fehlererkennungsschaltung und ein Schaltorgan vorzusehen sind, was zu einem sehr geringen Bauteilbedarf und einem einfachen konstruktiven Aufbau führt.

Weiterhin ist es bevorzugt, wenn das Schaltorgan ein Relais mit einem Schließkontakt ist.

Bei dieser Maßnahme ist von Vorteil, daß mit dem Relais ein sehr preiswerter Massenartikel als Schaltorgan vorgesehen wird.

Alternativ ist es auch bevorzugt, wenn das Schaltorgan ein Halbleiterschalter ist.

Bei dieser Maßnahme nun ist von Vorteil, daß die Baugröße von Halbleiterschaltern sehr klein ist und die Halbleiterschalter andererseits unmittelbar von anderen Logik-Schaltungsbauteilen angesteuert werden können, so daß der konstruktive Aufbau sehr einfach ist.

In einer Weiterbildung ist es bevorzugt, wenn der Fehlerstrom über eine Widerstandsstrecke in die Lampen der Beleuchtungsanlage des Zugfahrzeuges eingespeist wird und wenn eine Meßschaltung vorgesehen ist, die über der Widerstandsstrecke einen Spannungsabfall mißt und in Abhängigkeit von dem Spannungsabfall den Fehlerstrom wieder abschaltet.

Auf diese Weise wird sichergestellt, daß der Fehlerstrom nach dem Ausschalten der Beleuchtungsanlage des Zugfahrzeuges wieder abgeschaltet wird, also keine Selbsthaltefunktion des Schaltorganes auftritt. Dies kann alternativ natürlich auch dadurch realisiert werden, daß die vorgesehene Fehlererkennungsschaltung zwischen Betriebszuständen unterscheiden kann, in denen die überwachte Lampe der Beleuchtungsanlage des Hängers einerseits angesteuert und defekt ist und andererseits nicht angesteuert und defekt ist. Die Fehlererkennungsschaltung muß im letzteren Fall, also bei nichtangesteuerter Lampe, das Fehlersignal wieder abschalten.

Bei einem weiteren Ausführungsbeispiel ist es bevorzugt, wenn die Schaltungsanordnung je Fahrtrichtungsseite mit je einer Baugruppe im Strompfad zwischen der vorderen und der hinteren Lampe der Beleuchtungsanlage des Zugfahrzeuges liegt und den Fehlerstrom nur in die jeweils hintere Lampe einspeist. Auch diese Maßnahme ist konstruktiv von Vorteil, obwohl nämlich der Strompfad zwischen der vorderen und der hinteren Lampe der Beleuchtungsanlage des Zugfahrzeuges jeweils aufgetrennt und die neue Schaltungsanordnung zwischengeschaltet werden muß, der Einbauaufwand sich ggf. also etwas erhöht, ist die Schaltungsanordnung selbst konstruktiv sehr einfach aufgebaut, da insbesondere die Dimensionierung des Fehlerstromes hier unkritisch ist.

Hier ist es bevorzugt, wenn die Baugruppe je eine Diode umfaßt, die im Strompfad zwischen der vorderen und der hinteren Lampe der Beleuchtungsanlage des Zugfahrzeuges liegt.

Auch diese Maßnahme ist konstruktiv von Vorteil, durch die Diode wird nämlich verhindert, daß der Fehlerstrom auch in die vordere Lampe der Beleuchtungsanlage des Zugfahrzeuges eingespeist wird. Der Fehlerstrom gelangt also nur in die hintere Lampe, während die Lampenüberwachungsschaltung überwiegend nur noch die vordere Lampe treibt, obwohl die hintere Lampe elektrisch immer noch mit der Lampenüberwachungsschaltung verbunden ist. Auf diese Weise wird also sichergestellt, daß der von der Lampenüberwachungsschaltung bei Ausfall einer Lampe der Beleuchtungsanlage des Hängers abgegebene Betriebsstrom sich soweit reduziert, daß die Lampenüberwachungsschaltung einen Fehlerzustand erkennt und meldet.

Hier sei noch der Vollständigkeit halber erwähnt, daß die Lampen der Beleuchtungsanlage entweder über die Lampenüberwachungsschaltung betrieben werden, oder aber unmittelbar mit den entsprechenden Beleuchtungsschaltern verbunden sind, wobei die Lampenüberwachungsschaltung zu dem Beleuchtungsschalter oder den Lampen parallel geschaltet ist und lediglich eine Überwachungsfunktion darstellt. Werden die Lampen jedoch unmittelbar über die Lampenüberwachungsschaltung betrieben, so kann diese bspw. bei einem Kurzschluß den Stromkreis wieder öffnen, so daß nur dieser Zweig der Beleuchungsanlage abgeschaltet wird, die dementsprechend nicht wegen der erhöhten Stromaufnahme vollständig ausfällt.

Hierbei ist es bevorzugt, wenn der Fehlerstrom an der Kathodenseite der Diode eingespeist wird.

Durch diese Maßnahme wird erreicht, daß der Fehlerstrom nicht durch die Diode selbst fließen kann.

Weiterhin ist es bevorzugt, wenn von der Anodenseite der Diode eine Ansteuerleitung zu der Treiberschaltung führt.

Bei dieser konstruktiv vorteilhaften Maßnahme wird erreicht, daß beim Ausschalten der Lampen auch die Treiberschaltung abgeschaltet wird, woraufhin die Fehlererkennungsschaltung das betreffende Schaltorgan wieder öffnet.

Alternativ ist es in einem anderen Ausführungsbeispiel bevorzugt, wenn von der Anodenseite der Diode eine Ansteuerleitung zu dem Schaltorgan führt.

Diese Maßnahme hat den selben Vorteil wie die soeben erwähnte, der Fehlerstrom wird nämlich wieder abgeschaltet, sobald die Einschaltzeit beendet ist, und somit eine sozusagen "Selbsthaltefunktion" des Schaltorganes verhindert.

Weiterhin ist es bevorzugt, wenn die Schaltungsanordnung eine Hängererkennungsschaltung aufweist, die eine mit der Schaltungsanordnung verbundene Beleuchtungsanlage eines Hängers erkennt.

Diese Maßnahme ist insbesondere konstruktiv von Vorteil, weil jetzt sozusagen automatisch erkannt wird, ob ein Hänger angeschaltet ist oder nicht. Der Fahrzeugführer muß folglich keine Schalter umlegen, um die Schaltungsanordnung in einen entsprechenden Betriebszustand zu bringen. Weiterhin ist es hier möglich, die Fehlererkennungsschaltung schaltungstechnisch sehr einfach auszulegen, denn ohne die Hängererkennungsschaltung wäre es schwierig, zu entscheiden, ob tatsächlich eine defekte Lampe in der Beleuchtungsanlage des Hängers vorhanden ist, oder ob gar kein Hänger eingeschaltet ist.

In diesem Ausführungsbeispiel ist es ferner bevorzugt, wenn die Treiberschaltungen an ihrem Ausgang kurzschlußfest sind.

Diese Maßnahme ist besonders vorteilhaft, weil ein Kurzschluß in dem Hänger nicht zu einem Defekt an der in dem Zugfahrzeug angebrachten Schaltungsanordnung führt. Auf diese Weise kann der defekte Anhänger abgekoppelt und ein neuer Hänger angekoppelt werden, ohne daß weitere Maßnahmen an dem Zugfahrzeug erforderlich wären.

Hier ist es ferner bevorzugt, wenn bei mit der Beleuchtungsanlage des Zugfahrzeuges verbundener Beleuchtungsanlage des Hängers die Hängererkennungsschaltung mit Lampen der Beleuchtungsanlage des Hängers verbunden ist.

Auf diese schaltungstechnisch einfache Weise erkennt die Hängererkennungsschaltung anhand der über die Lampen des Hängers zur Verfügung stehenden Masse, daß ein Hänger angeschaltet wurde.

Ferner ist es bevorzugt, wenn bei mit der Beleuchtungsanlage des Zugfahrzeuges verbundener Beleuchtungsanlage die Hängererkennungsschaltung mit einem Hängererkennungskontakt verbunden ist, der auf Masse liegt.

Diese Maßnahme wird vorteilhafter Weise insbesondere dann verwendet, wenn die Übergabeeinrichtung einen 13-poligen Stecker nach der Vornorm DIN 72570 aufweist, nach der eine besondere Klemme als Hängererkennung vorgesehen ist.

Weiterhin ist es bevorzugt, wenn die Hängererkennungsschaltung mit ausgewählten Treiberschaltungen derart verbunden ist, daß sie einen Stromfluß durch die entsprechenden Lampen erkennt.

Auf diese schaltungstechnisch einfache Weise wird sichergestellt, daß die Hängererkennungsschaltung auch dann sicher einen angeschalteten Hänger erkennt, wenn kein Hängererkennungskontakt vorhanden ist und wenn andererseits sämtliche Lampen des Hängers eingeschaltet sind. Bei eingeschalteten Lampen des Hängers fällt über den Lampen nämlich eine Spannung ab, die etwa der Betriebsspannung des Zugfahrzeuges entspricht, so daß die Hängererkennungsschaltung, die auf Masse-Erkennung ausgelegt ist, keine Masse mehr erkennen könnte. Diese mögliche Fehlerquelle wird dadurch ausgeschaltet, daß die Hängererkennungsschaltung zusätzlich den Stromfluß durch ausgewählte Lampen des Hängers überwacht.

Ferner ist es hier bevorzugt, wenn die Fehlererkennungsschaltung den Spannungsabfall über den Lampen der Beleuchtungsanlage des Hängers mißt.

Auch diese Maßnahme ist schaltungstechnisch von Vorteil, denn anhand des Spannungsabfalls läßt sich unmittelbar erkennen, ob die entsprechende Lampe im Leerlaufzustand und somit defekt ist.

In diesem Ausführungsbeispiel ist es ferner bevorzugt, wenn die Fehlererkennungsschaltung und die Hängererkennungsschaltung an ihren Ausgängen über eine Logik-Schaltung miteinander verknüpft sind, wobei die Logik-Schaltung in Abhängigkeit von den Signalen der Fehlererkennungsschaltung und der Hängererkennungsschaltung das Schaltorgan einschaltet.

Bei diese Maßnahme ist es von Vorteil, daß die Informationen, die die Fehlererkennungsschaltung und die Hängererkennungsschaltung liefern, unmittelbar dazu verwendet werden, das Schaltorgan zu betätigen. Die Anordnung ist derart, daß nur bei einem erkannten Hänger die Fehlererkennungsschaltung überhaupt das Schaltorgan betätigen kann. Auf diese Weise werden unnötige Schaltvorgänge des Schaltorganes verhindert und andererseits wird die Batterie des Zugfahrzeuges entlastet.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen und in Alleinstellung verwendbar sind, ohne den Rahmen der vorstehenden Erfindung zu verlassen.

Die Erfindung ist in der Zeichnung dargestellt und wird in der nachfolgenden Beschreibung näher erläutert. Es zeigen:
- Fig. 1: in prinzipieller Darstellung die über eine erfindungsgemäße Schaltungsanordnung zusammengeschalteten Beleuchtungsanlagen eines Zugfahrzeuges und eines Hängers;
- Fig. 2: ein erstes Ausführungsbeispiel der Schaltungsanordnung aus Fig. 1;
- Fig. 3: ein zweites Ausführungsbeispiel der Schaltungsanordnung aus Fig. 1;
- Fig. 4: ein drittes Ausführungsbeispiel der Schaltungsanordnung aus Fig. 1;
- Fig. 5: in einer Abwandlung der prinzipiellen Darstellung aus Fig. 1 ein viertes Ausführungsbeispiel der neuen Schaltungsanordnung;
- Fig. 6: in einer Darstellung wie Fig. 5 ein fünftes Ausführungsbeispiel der Schaltungsanordnung;
- Fig. 7: die Fehlererkennungsschaltung aus Fig. 2, in einer detaillierteren Darstellung;
- Fig. 8: eine schematische Darstellung wie Fig. 1, wobei die Schaltungsanordnung eine Hängererkennungsschaltung umfaßt;
- Fig. 9: die Hängererkennungsschaltung nach Fig. 8, in einer detaillierteren Darstellung; und
- Fig. 10: eine Darstellung wie Fig. 3, wobei eine einfache kombinierte Treiber- und Fehlererkennungsschaltung verwendet wird.

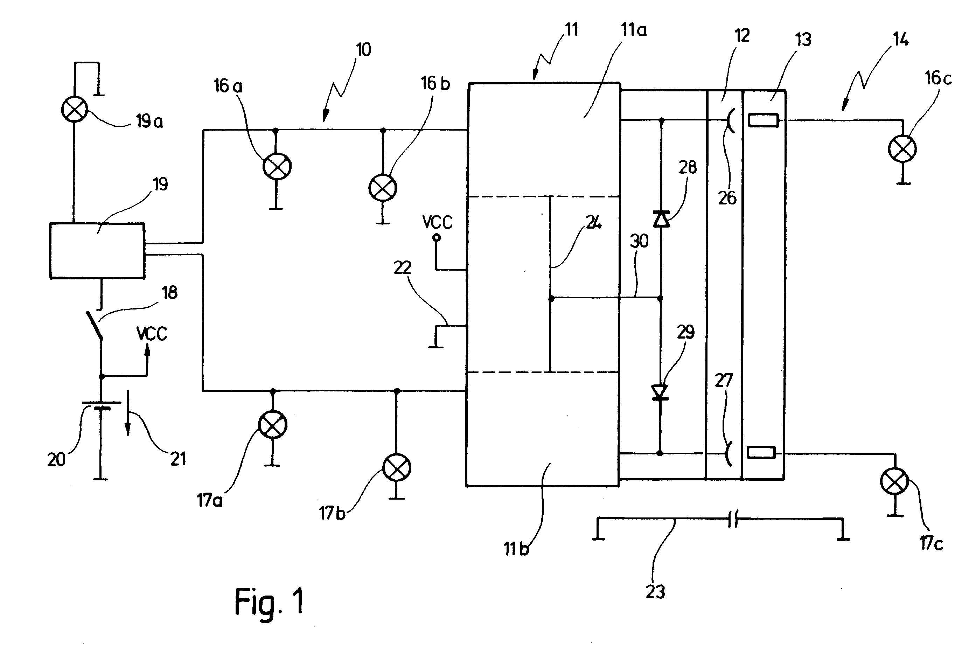

In Fig. 1 ist mit 10 eine elektrische Beleuchtungsanlage eines nicht näher dargestellten Zugfahrzeuges bezeichnet, die mit einer in das Zugfahrzeug eingebauten Schaltungsanordnung 11 verbunden ist. Die Schaltungsanordnung 11 weist eine Steckdose 12 auf, die einem Stecker 13 zugeordnet ist, über den eine elektrische Beleuchtungsanlage 14 eines ebenfalls nicht dargestellten Hängers mit der elektrischen Anlage des Zugfahrzeuges verbunden werden kann.

In Fig. 1 sind mit 16 und 17 beispielhaft einzelne Lampen der Beleuchtungsanlage 10 bzw. 14 bezeichnet. Die Lampen 16 sind die linken und die Lampen 17 die rechten Lampen der Beleuchtungsanlagen 10 bzw. 14. In dem gezeigten Ausführungsbeispiel bezeichnet 16a, 17a die vorderen Lampen des Zugfahrzeuges und 16b, 17b die hinteren Lampen des Zugfahrzeuges, während mit 16c und 17c die Lampen des Hängers bezeichnet sind. Diese Lampen können das Fahrlicht, die Nebelschlußleuchte, das Rückfahr- und Bremslicht sowie andere Lampen repräsentieren.

Wie üblich weist das Zugfahrzeug einen Beleuchtungsschalter 18 auf, der die Lampen wahlweise mit einer Lampenüberwachungsschaltung 19 verbindet.

Die Lampenüberwachungsschaltung 19 ist mit einer Batterie 20 verbunden, die das Zugfahrzeug mit seiner Betriebsspannung 21 versorgt, die im weiteren auch mit VCC bezeichnet wird. Es ist zu erkennen, daß die Schaltungsanordnung 11 mit der Betriebsspannung 21 verbunden ist und ebenfalls einen Masseanschluß 22 aufweist. Weiterhin ist zu erkennen, daß der Hänger über eine Masseleitung 23 mit der Masse des Zugfahrzeuges verbunden ist. In dem gezeigten Ausführungsbeispiel ist die Masseleitung 23 nicht über Steckdose 12 und Stecker 13 geführt.

Weiterhin ist in Fig. 1 gezeigt, daß die linken Lampen 16 der Beleuchtungsanlagen 10 und 14 mit einer Baugruppe 11a der Schaltungsanordnung 11 verbunden sind, während für die rechten Lampen 17 eine Baugruppe 11b vorgesehen ist. Die beiden Baugruppen 11a und 11b sind miteinander über eine Leitung 24 und mit Kontakten 26, 27 der Steckdose 12 über Dioden 28, 29 verbunden. Die Dioden 28 und 29 sind mit ihren Anoden zusammengeschaltet und hängen mit ihren Kathoden an den Kontakten 26 bzw. 27. Die Anoden der Dioden 28, 29 sind über eine Hängererkennungsleitung 30 mit der Leitung 24, die eine Meldeleitung 24 ist, verbunden, so daß sie in noch zu beschreibender Weise eine Hängererkennungsschaltung darstellt.

Bei gestecktem und elektrisch angeschlossenem Hänger, d.h. wenn der Stecker 13 in die Steckdose 12 gesteckt wurde, wie es in Fig. 1 dargestellt ist, erkennt die Schaltungsanordnung 11 dies über die Hängererkennungsleitung 30. Bei gestecktem Hänger sind nämlich die Kathoden der Dioden 28 und 29 über die Lampen 16c bzw. 17c mit Masse verbunden, so daß durch die Dioden 28, 29 ein Strom fließen kann. Wegen der Parallelschaltung der Dioden 28 und 29 halbiert sich der auf der Hängererkennungsleitung 30 fließende Strom, so daß jede der Lampen 16c, 17c nur die Hälfte des auf der Hängererkennungsleitung 30 fließenden Stromes führen muß.

Wenn eine der Lampen 16, 17 der Beleuchtungsanlage 10 des Zugfahrzeuges ausfällt, so erkennt die Lampenüberwachungsschaltung 19 bei betätigtem Beleuchtungsschalter 18 diesen Ausfall an der veränderten Stärke des fließenden Stromes. In diesem Falle betätigt die Lampenüberwachungsschaltung 19 eine Anzeige 19a, so daß der Fahrer des Zugfahrzeuges auf einer Kontrolleuchte im Wageninneren den Ausfall einer der Lampen 16, 17 seiner Beleuchtungsanlage 10 erkennt.

Bei gestecktem Stecker 13 fließt auf der Hängererkennungsleitung 30 ein Strom, der in noch näher zu beschreibender Weise ermöglicht, daß die Schaltungsanordnung 11 für einen veränderten Stromfluß in der Lampenüberwachungsschaltung 19 sorgt, wenn der Beleuchtungsschalter 18 betätigt wurde und die zugeordnete Lampe 16c bzw. 17c der Beleuchtungsanlage 14 des Hängers ausgefallen ist, wenn also z.B. ihr Glühfaden gebrochen ist.

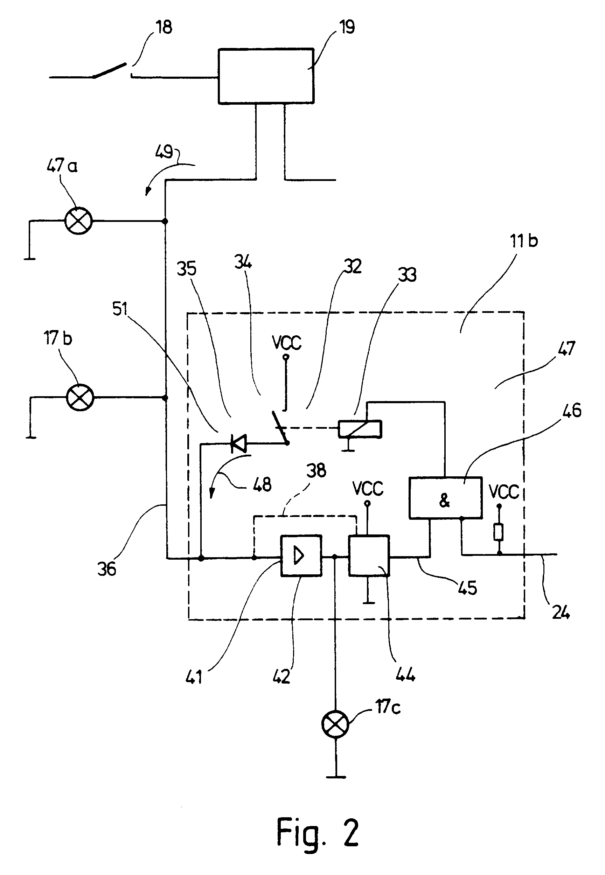

Wie dies geschieht, wird jetzt anhand von Fig. 2 erläutert, in der die den rechten Lampen 17 zugeordnete Baugruppe 11b detaillierter dargestellt ist. Die in gleicher Weise wie die Baugruppe 11b aufgebaute Baugruppe 11a ist in Fig. 2 der Übersicht halber nicht dargestellt.

Die Baugruppe 11b umfaßt ein Schaltorgan 32 in Form eines Relais 33 mit einem Schließkontaktpaar 34, das über eine als Strombegrenzer wirkende Diode 35 mit einer Anschlußleitung 36 verbunden ist, die aus der Baugruppe 11b herausführt. Es ist in Fig. 2 zu erkennen, daß die Anschlußleitung 36 mit den parallel geschalteten rechten Lampen 17a, 17b der Beleuchtungsanlage 10 des Zugfahrzeuges verbunden ist.

Die Anschlußleitung 36 ist andererseits sowohl mit einer Meßleitung 38 als auch mit einem hochohmigen Eingang 41 einer Treiberschaltung 42 verbunden, die ihrerseits an ihrem Ausgang sowohl mit der rechten Lampe 17c der Beleuchtungsanlage 14 des Hängers als auch mit einer Fehlererkennungsschaltung 44 verbunden ist. Die Fehlererkennungsschaltung 44 ermittelt in noch näher zu beschreibender Weise, ob die Lampe 17c ausgefallen ist. Dazu ist die Fehlererkennungsschaltung 44 ebenfalls mit der Meßleitung 38 verbunden, so daß sie die Spannungsabfälle über den Lampen 17b und 17c vergleichen und daraus auf den Betriebszustand der Lampe 17c schließen kann, der "angesteuert und funktionsfähig", "nicht angesteuert" sowie "angesteuert und defekt" lauten kann.

Die Fehlererkennungsschaltung 44 liefert an ihrer Ausgangsleitung 45 ein Signal, das in einem UND-Gatter 46 mit der Meldeleitung 24 verbunden ist. Das zuvor invertierte Signal auf der Meldeleitung 24 gibt an, ob tatsächlich ein Hänger elektrisch angeschlossen ist, und das Signal am Ausgang der Fehlererkennungsschaltung 44 liefert eine Aussage darüber, ob die angesteuerte Lampe 17c ausgefallen ist. Sind beide Bedingungen erfüllt, so schaltet das UND-Gatter 46 über seine Ausgangsleitung 47 das Relais 33 durch, und das Schließkontaktpaar 34 wird geschlossen. Ist dies geschehen, so wird von der Batteriespannung VCC über das Schließkontaktpaar 34 und die Strombegrenzerdiode 35 ein Fehlerstrom 48 in die Lampen 17a, 17b der Beleuchtungsanlage 10 des Zugfahrzeuges eingespeist. Dieser Fehlerstrom 48 überlagert sich einem bei 49 angedeuteten Betriebsstrom, der der Lampenüberwachungsschaltung 19 entnommen wird. Wird als Treiberschaltung bspw. ein BTS100 o.ä. verwendet, so kann an dessen Statusausgang unmittelbar die Ausgangsleitung 45 angeschlossen werden, so daß die Fehlererkennungsschaltung 44 fortfallen kann, da sie sozusagen in der Treiberschaltung 42 schon vorhanden ist.

Da die Lampen 17a und 17b annähernd gleiche Durchgangswiderstände haben und andererseits die Strombegrenzerdiode 35 eine Widerstandsstrecke 51 darstellt, wie sie auch in der Lampenüberwachungsschaltung 19 zu finden ist, halbieren sich sowohl der Fehlerstrom 48 als auch der Betriebsstrom 49 und fließen je zur Hälfte durch die Lampen 17a und 17b.

Da die Baugruppe 11b bei Ausfall der Lampe 17c in einen Schaltzustand gerät, in dem sozusagen aus zwei parallelen Spannungsquellen, nämlich einmal aus der Lampenüberwachungsschaltung 19 und einmal über die Strombegrenzerdiode 35 aus der Betriebsspannung VCC, Strom in die Lampen 17a und 17b eingespeist wird, bleibt der insgesamt durch diese Lampen 17a, 17b fließende Strom konstant, wird jedoch je etwa zur Hälfte von dem Betriebsstrom 49 und dem Fehlerstrom 48 getragen. Anders ausgedrückt, der aus der Lampenüberwachungsschaltung 19 stammende Betriebsstrom 49 hat etwa die Größe des Fehlerstromes 48 und ist somit gegenüber dem fehlerfreien Betrieb der Lampe 17c etwa halbiert.

Der Lampenüberwachungsschaltung 19 wird sozusagen eine reduzierte Stromaufnahme der Beleuchtungsanlage 10 des Zugfahrzeuges simuliert, was bewirkt, daß die Lampenüberwachungsschaltung 19 einen Fehlerzustand annimmt und anzeigt.

Zusammengefaßt läßt sich sagen, daß beim Ausfall einer angesteuerten Lampe 17c der Beleuchtungsanlage 14 des Hängers in die Beleuchtungsanlage 10 des Zugfahrzeuges ein Fehlerstrom 48 eingespeist wird, der sich dem von der Lampenüberwachungsschaltung 19 gelieferten Betriebsstrom 49 derart überlagert, daß in den Lampen 17a und 17b weiterhin ein Strom gleicher Stärke fließt, wodurch sich der Betriebsstrom 49 gegenüber dem fehlerfreien Betrieb halbiert, was die Lampenüberwachungsschaltung 19 als Fehlerzustand erkennt und meldet.

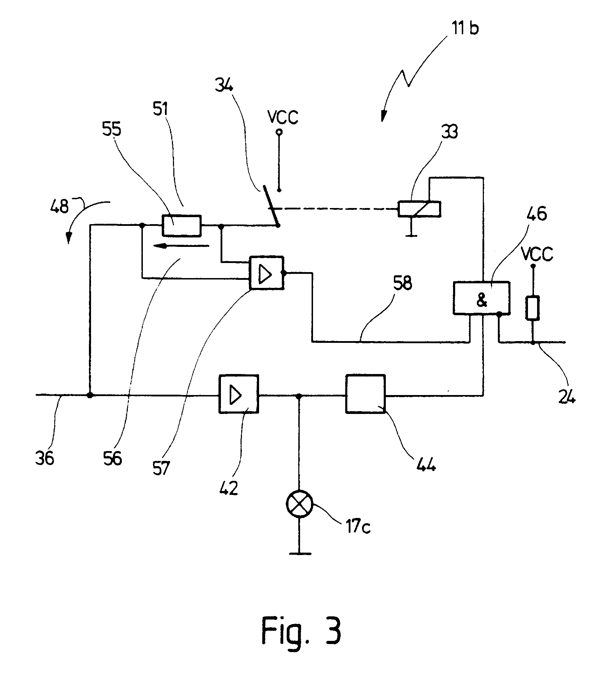

Die in Fig. 3 gezeigte Baugruppe 11b unterscheidet sich von der in Fig. 2 gezeigten insofern, als statt der Strombegrenzerdiode (35 in Fig. 2) hier ein Shunt-Widerstand 55 vorgesehen ist, welcher die Widerstandsstrecke 51 bildet. Bei Ausfall der Lampe 17c verursacht der Fehlerstrom 48 über dem Shunt-Widerstand 55 einen Spannungsabfall 56, der in einer nachgeschalteten Meßschaltung 57 erfaßt wird. Die Meßschaltung 57 führt mit ihrer Ausgangsleitung 58 ebenfalls zu dem UND-Gatter 46.

Fließt jetzt bei Ausfall der Lampe 17c ein Fehlerstrom 48, so wird dies von der Meßschaltung 57 erfaßt. Nach dem Öffnen des Beleuchtungsschalters 18 fällt der Betriebsstrom (49 in Fig. 2) aus der Lampenüberwachungsschaltung 19 weg, so daß der gesamte von den Lampen 17a und 17b aufgenommene Strom nunmehr durch den Fehlerstrom 48 geliefert wird, der folglich seinen Wert ungefähr verdoppelt.

Dieser Anstieg der Stromstärke wird über den Shunt-Widerstand 55 in einen Anstieg des Spannungsabfalles 56 umgewandelt und von der Meßschaltung 57 erfaßt. Über ihre Ausgangsleitung 58 verriegelt die Meßschaltung 57 jetzt das UND-Gatter 46, so daß das Relais 33 wieder abfällt.

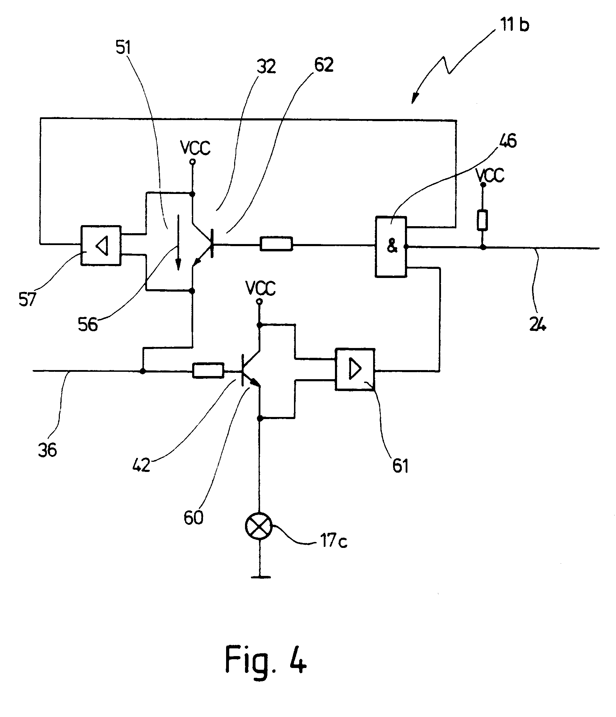

In dem in Fig. 4 gezeigten dritten Ausführungsbeispiel der Baugruppe 11b ist die Treiberschaltung 42 durch einen Transistor 60 realisiert, dessen Kollektor-Emitterspannung über eine Meßschaltung 61 erfaßt wird. Weiter ist zu erkennen, daß als Schaltorgan 32 ein Halbleiterschalter 62 vorgesehen ist, dessen Kollektor-Emitter-Spannung von der bereits aus Fig. 3 bekannten Meßschaltung 57 überwacht wird. Der Halbleiterschalter 32 wirkt somit gleichzeitig als Widerstandsstrecke 51. Die Funktionsweise der Schaltung aus Fig. 4 entspricht ansonsten der Funktionweise der Schaltung aus Fig. 3.

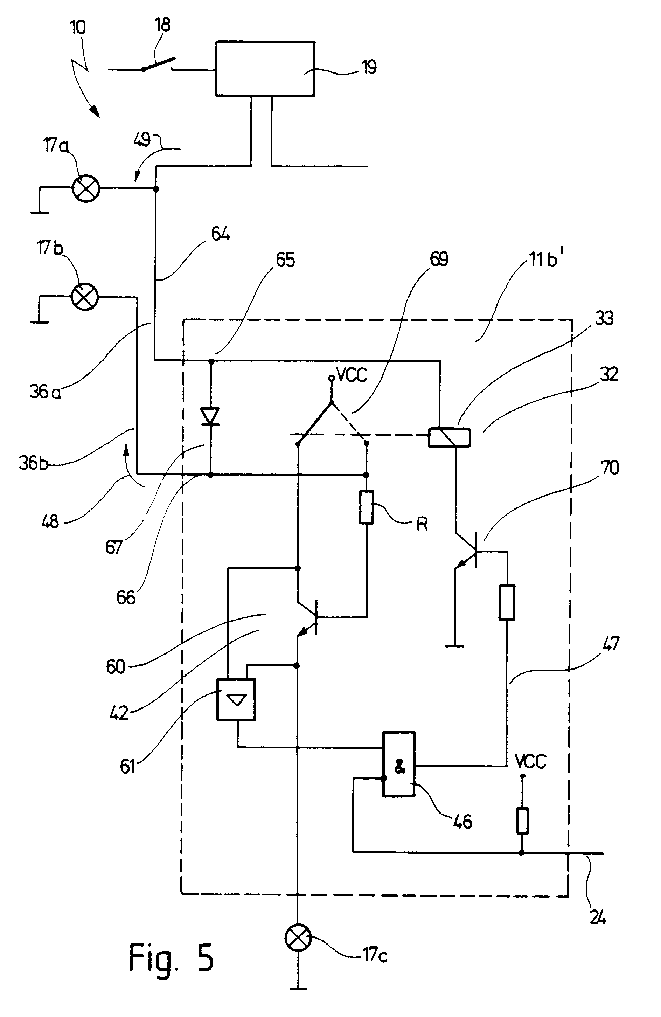

In Fig. 5 ist in einer Darstellung wie Fig. 2 schematisch die Zusammenschaltung einer weiteren Baugruppe 11b' mit der "rechten Seite" der Beleuchtungsanlage 10 eines Zugfahrzeuges dargestellt. Es ist zu erkennen, daß die Verbindung zwischen den Lampen 17a und 17b, die einen Strompfad 64 darstellt, aufgetrennt ist und die Baugruppe 11b' über eine Anschlußleitung 36a mit der Lampenüberwachungsschaltung 19 und der vorderen Lampe 17a sowie über eine Anschlußleitung 36b mit der hinteren Lampe 17b verbunden ist. Zwischen die Anschlußleitungen 36a und 36b ist mit ihrer Anodenseite 65 und ihrer Kathodenseite 66 eine Diode 67 geschaltet. Als Schaltorgan ist wieder ein Relais 33 vorgesehen, das diesmal einen Umschaltkontakt 69 aufweist, und mit seiner Spule zwischen die Anodenseite 65 der Diode 67 und einen Halbleiterschalter 70 geschaltet ist. Als Treiberschaltung 42 ist der schon aus Fig. 4 bekannte Transistor 60 vorgesehen, dessen Kollektor-Emitter-Spannung mittels der Meßschaltung oder Fehlererkennungsschaltung 61 überwacht wird. An seinen Emitter ist der Transistor 60 in schon beschriebener Weise mit der Lampe 17c verbunden, die somit abgekoppelt von der Beleuchtungsanlage 10 über die Treiberschaltung 42 betrieben wird.

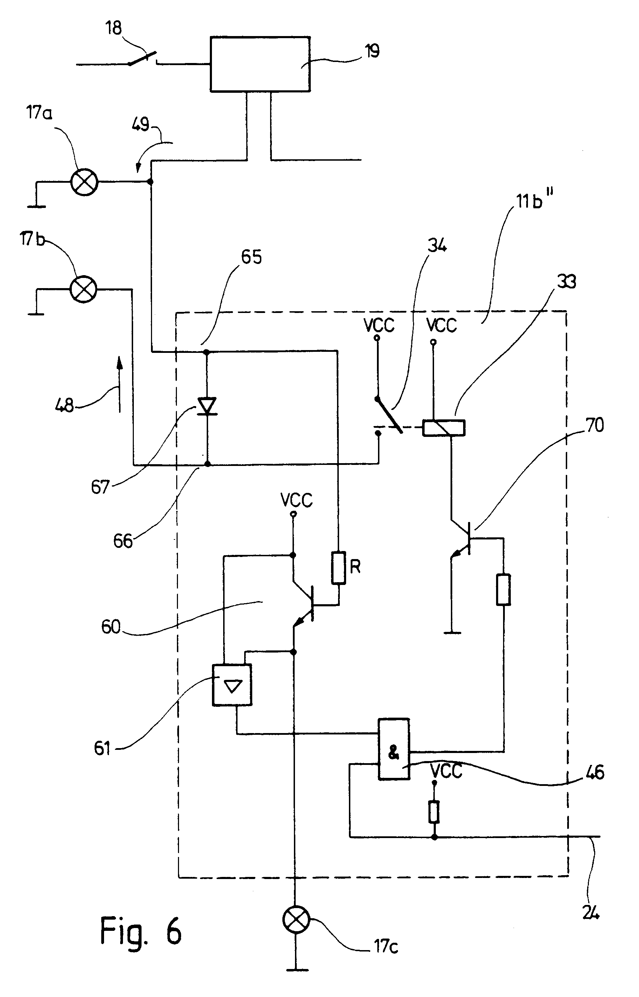

Im fehlerfreien Betrieb befindet sich der Umschaltkontakt 69 in dem in Fig. 6 gezeigten Zustand, in dem er die Betriebsspannung VCC mit dem Kollektor des Schalttransistors 60 verbindet. Da die Basis des Transistors 60 über einen Widerstand R und die Diode 67 mit der Lampenüberwachungsschaltung 19 verbunden ist, folgt der Strom durch den Transistor 60 der Lampenüberwachungsschaltung 19, so daß die Lampe 17c zusammen mit den Lampen 17a und 17b leuchtet.

Fällt die Lampe 17c aus, so fließt kein Strom mehr durch den Transistor 60, was von der Meßschaltung 61 erkannt und an das UND-Gatter 46 weitergegeben wird. In diesem Falle schaltet das UND-Gatter 46 über seine Ausgangsleitung 47 den Halbleiterschalter 70 durch, und das Relais 33 zieht an. Der dazu erforderliche Strom wird ebenfalls aus der Lampenüberwachungsschaltung 19 geliefert, er beträgt jedoch weniger als 10 % des üblicherweise von der Lampenüberwachungsschaltung 19 abgegebenen Betriebsstromes, so daß die Funktionsweise der Lampenüberwachungsschaltungs 19 nicht gestört bzw. beeinträchtigt wird. Durch das Umschalten des Relais 33 ist die Betriebsspannung VCC jetzt unmittelbar mit der Kathodenseite 66 der Diode 67 und damit mit der hinteren Lampe 17b der Beleuchtungsanlage 10 des Zugfahrzeuges verbunden. Wegen der Polung der Diode 67 fließt der Fehlerstrom 48 in die Lampe 17b, während der Betriebsstrom 49 aus der Lampenüberwachungsschaltung 19 überwiegend in die Lampe 17a und nur zu geringem Teil über die Diode 67 in die Lampe 17b fließt. Da der von der Lampe 17b aufgenommene Strom zum größten Teil durch den Fehlerstrom 48 dargestellt wird, geht der von der Lampenüberwachungsschaltung 19 gelieferte Betriebsstrom 49 zurück, und die Lampenüberwachungsschaltung erkennt einen Fehlerfall und signalisiert dies.

Nach dem Ausschalten des Beleuchtungsschalters 18 fällt die Lampenüberwachungsschaltung 19 in ihren Aus-Zustand, so daß kein weiterer Betriebsstrom 49 geliefert wird. Wegen der Polung der Diode 67 kann der Fehlerstrom 48 nicht dazu beitragen, daß das Relais 33 angezogen bleibt, dieses fällt also zusammen mit der Lampenüberwachungsschaltung 19 ab. Damit schaltet auch der Umschaltkontakt 69 in seine in Fig. 5 gezeigte Ruhelage zurück, so daß auch der Fehlerstrom 48 abgeschaltet wird.

Ohne die Diode 67, d.h. wenn die Anschlußleitung 36a und 36b unmittelbar miteinander verbunden wären, würde sich das Relais 33 in einem Selbsthaltezustand befinden, denn über den geschalteten Umschaltkontakt 69 - gestrichelte Stellung in Fig. 5 - würde aus der Betriebsspannung VCC unmittelbar der Betriebsstrom für das Relais 33 geliefert werden. Da die Meßschaltung 61 weiterhin den Fehlerzustand der Lampe 17c erkennt, liefert das UND-Gatter 46 ein Ausgangssignal auf seine Ausgangsleitung 47 und hält den Halbleiterschalter 70 durchgeschaltet. Andererseits würde der jetzt immer noch fließende Fehlerstrom 48 nicht nur das Relais 33 geschaltet halten, sondern ebenfalls die Lampen 17a und 17b mit Strom versorgen. Dies würde sich ebenfalls auf der Kontrolleuchte in dem Fahrzeuginneren bemerkbar machen, so daß auch ohne die Diode 67 (überbrückt) eine Erfassung der Fehlfunktion der Lampe 17c möglich ist.

In Fig. 6 ist eine Abwandlung der Baugruppe 11b' mit 11b'' bezeichnet und in einer entsprechenden Darstellung wie Fig. 5 gezeigt.

In Fig. 6 ist zu erkennen, daß die Spule des Relais 33 hier unmittelbar mit VCC verbunden ist und daß das Relais 33 wieder einen Schließkontakt 34 aufweist, über den die Betriebsspannung VCC mit der Kathodenseite 66 der Diode 67 verbindbar ist. Die Anodenseite 65 der Diode 67 ist über den Widerstand R mit der Basis des Transistors 60 verbunden, dessen Kollektor hier immer auf VCC gelegt ist. Ansonsten entspricht die Baugruppe 11b'' in ihrer Beschaltung der Baugruppe 11b' aus Fig. 5.

Im Normalbetrieb wird die Ausgangsspannung der Lampenüberwachungsschaltung 19 von dem Transistor 60 hochohmig abgegriffen und zur Ansteuerung der Lampe 17c umgesetzt. Der Stromfluß durch den Transistor 60 wird wieder von der Meßschaltung 61 überwacht, deren Ausgang über die UND-Schaltung 46 logisch mit der invertierten Meldeleitung 24 verbunden ist, die angibt, ob ein Hänger angeschaltet ist. Erkennt die Fehlerkennungsschaltung 61 einen Ausfall der Lampe 17c und ist gleichzeitig ein Hänger eingeschaltet (Signal L auf Meldeleitung 24), so wird der Transistor 70 durchgeschaltet, und über das nun geschlossene Schließkontaktpaar 34 gelangt ein Fehlerstrom 48 in die hintere Lampe 17b der Beleuchtungsanlage 10 des Zugfahrzeuges. Wie schon anhand von Fig. 5 beschrieben, geht jetzt der aus der Lampenüberwachungsschaltung 19 stammende Betriebsstrom 49 etwa auf seinen halben Wert zurück, so daß die Lampenüberwachungsschaltung 19 einen Fehlerzustand erkennt. Wie schon erwähnt, kann die Lampenüberwachungsschaltung 19 auch parallel zu den Lampen (also gegen Masse) oder dem Beleuchtungsschalter 18 (also gegen VCC) geschaltet sein, dann wird der Betriebsstrom 49 aus der Batterie 20 gewonnen, und die Lampenüberwachungsschaltung 19 dient lediglich zur Fehleranzeige.

In schon beschriebener Weise verhindert die Diode 67 eine Selbsthaltefunktion des Relais 33: Wenn der Beleuchtungsschalter 18 den Betriebsstrom 49 ausschaltet, schließt der Transistor 60, und das Fehlersignal der Fehlererkennungsschaltung 61 wird zurückgenommen, so daß über das UND-Gatter 46 der Transistor 70 gesperrt wird, was nun wiederum dazu führt, daß das Schließkontakt 34 öffnet und auch der Fehlerstrom 48 abgeschaltet wird.

Es sei noch erwähnt, daß bei den insoweit anhand der Fig. 2 bis 6 beschriebenen Baugruppen 11b, 11b', 11b'' selbstverständlich die Erkennung eines Fehlers in den Lampen 17a und 17b weiterhin unmittelbar von der Lampenüberwachungsschaltung 19 selbst vorgenommen wird. In diesem Falle wird über die jeweilige Treiberschaltung 42 die Lampe 17c weiter betrieben, während eine der beiden Lampen 17a und 17b ausfällt, was ebenfalls zu einer Reduzierung des Betriebsstromes 49 führt.

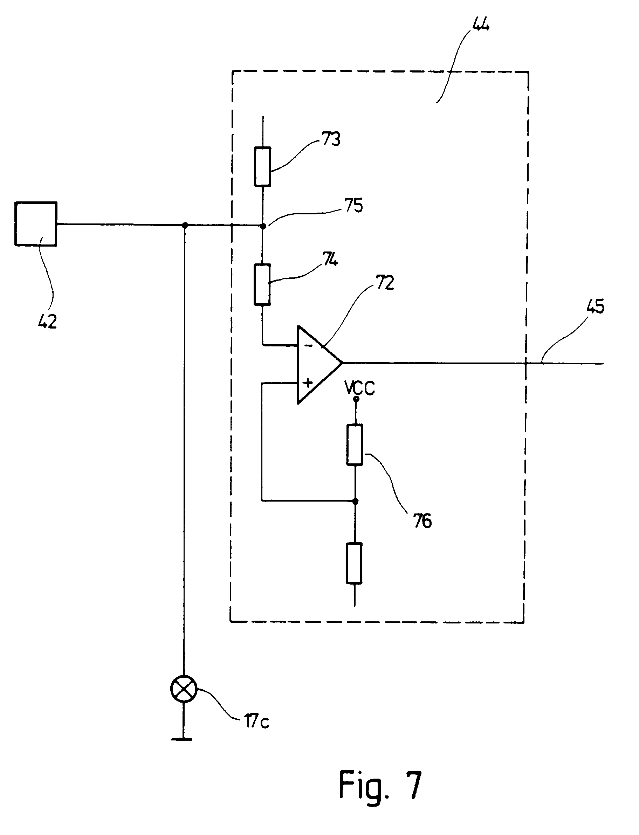

Während die Meßschaltung 61, die ebenfalls als Fehlererkennungsschaltung arbeitet, lediglich den Spannungsabfall über der Kollektor-Emitter-Strecke des Transistors 60 ermittelt und daraus bestimmt, ob eine angeschlossene Lampe 17c ausgefallen ist, mißt die in Fig. 3 zu erkennende Fehlererkennungsschaltung 44 unmittelbar den Spannungsabfall bei einer Lampe 17c. Wie dies geschieht, wird jetzt anhand von Fig. 7 beschrieben.

Die Fehlererkennungsschaltung 44 weist einen Operationsverstärker 72 auf, dessen invertierender Eingang über eine Reihenschaltung auf zwei Widerständen 73 und 74 auf VCC gelegt ist. Über ihren Mittenabgriff 75 sind die beiden Widerstände 73, 74 mit dem Ausgang der Treiberschaltung 42 und der Lampe 17c verbunden.

Der nicht-intervertierende Eingang des Operationsverstärkers 72 ist mit dem Mittenabgriff eines Spannungsteilers 76 verbunden, der den nicht-intervertierenden Eingang mit einer Referenzspannung versorgt, die deutlich geringer ist als VCC. In dem gezeigten Beispiel ist die Referenzspannung ca. ein Viertel von VCC.

An seinem Ausgang ist der Operationsverstärker 72 mit der Leitung 45 verbunden.

An dem invertierenden Eingang des Operationsverstärkers 72 können nun drei verschiedene Betriebszustände eintreten:

Im ersten Fall ist die Lampe 17c in Ordnung aber nicht angesteuert. Hier wird der Mittenabgriff 75 durch die Lampe 17c auf Masse gezogen, so daß das Potential des invertierenden Einganges unterhalb des Potentials des nicht-intervertierenden Einganges des Operationsverstärkers 72 gelangt, der Ausgang des Operationsverstärkers 72 und die Ausgangsleitung 45, die zu dem UND-Gatter 46 führt, gehen also auf logisch H.

Im zweiten Falle ist die Lampe 17c ebenfalls in Ordnung, wird jedoch von der Lampenüberwachungsschaltung 19 über die Treiberschaltung 42 mit Strom versorgt. Auch hier geht der Ausgang des Operationsverstärkers 72 auf logisch H, und das Signal auf der Ausgangsleitung 45 bleibt auf logisch H.

Im dritten Fall ist entweder die Lampe 17c defekt, oder aber es ist gar keine Lampe 17c vorhanden. In diesem Falle bleibt der Mittenabgriff 75 immer auf logisch H, so daß wegen des nun auf logisch L liegenden Ausganges des Operationsverstärkers 72 die Ausgangsleitung 45 auf logisch L liegt.

Wie bereits erwähnt, führt dies bei einem Leerlaufzustand der Lampe 17c dazu, daß ein Fehlerstrom 48 in die Beleuchtungsanlage 10 des Zugfahrzeuges eingespeist wird und somit die Lampenüberwachungsschaltung 19 einen "simulierten" Fehlerzustand erkennen läßt.

Ist jedoch gar kein Hänger gesteckt, hat also die Fehlererkennungsschaltung 44 nicht einen Leerlaufzustand, sondern das völlige Fehlen einer Lampe 17c erkannt, so wird wegen des fehlenden Meldesignales auf der Leitung 24 über das UND-Gatter 46 verhindert, daß die Ausgangsleitung 47 das jeweils nachgeschaltete Schaltorgan 32 schaltet.

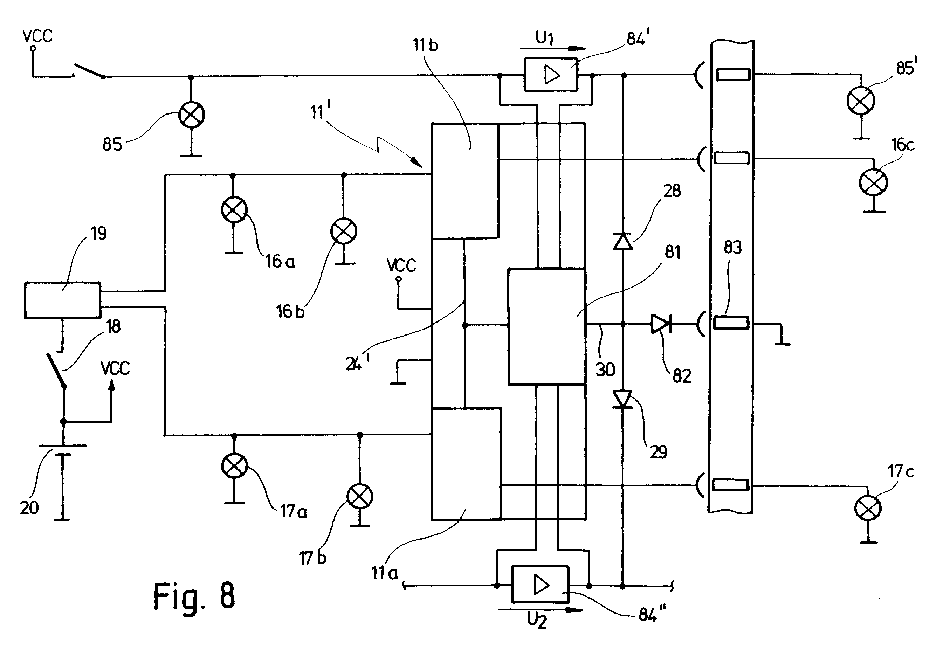

In Fig. 8 ist in einer Darstellung wie Fig. 1 eine weitere erfindungsgemäße Schaltungsanordnung 11' dargestellt, die neben den schon beschriebenen Baugruppen 11a und 11b eine Hängererkennungsschaltung 81 aufweist, die zwischen die Hängererkennungsleitung 30 und die Meldeleitung 24' geschaltet ist. Es ist zu erkennen, daß die Hängererkennungsleitung 30 mit einer weiteren Diode 82 verbunden ist, die unmittelbar mit einem Hängererkennungskontakt 83 verbunden ist, wie er nach der Vornorm DIN 72570 bei einem 13-poligen Stecker als Anhängererkennung vorgesehen ist.

Weiterhin ist die Hängererkennungsschaltung 81 mit Treiberschaltungen 84 verbunden, über die von bei 85 angedeuteten weiteren Lampen der Beleuchtungsanlage 10 des Zugfahrzeuges hochohmig Signalspannungen abgegriffen und zum Treiben der entsprechenden Beleuchtungslampe 85' der Beleuchtungsanlage 14 des Hängers vorgesehen sind. Durch das hochohmige Abgreifen von Signalspannungen von den Lampen 85 wird im Falle eines Kurzschlusses auf der Hängerseite verhindert, daß die elektrische Anlage des Zugfahrzeuges vollständig ausfällt. Für die Lampen 85, 85' können ebenfalls Baugruppen 11a, 11b vorgesehen sein, so daß alle Lampen der Beleuchtungsanlage 14 auf Fehler überwacht und diese über die üblichen Anzeigeinstrumente angezeigt werden.

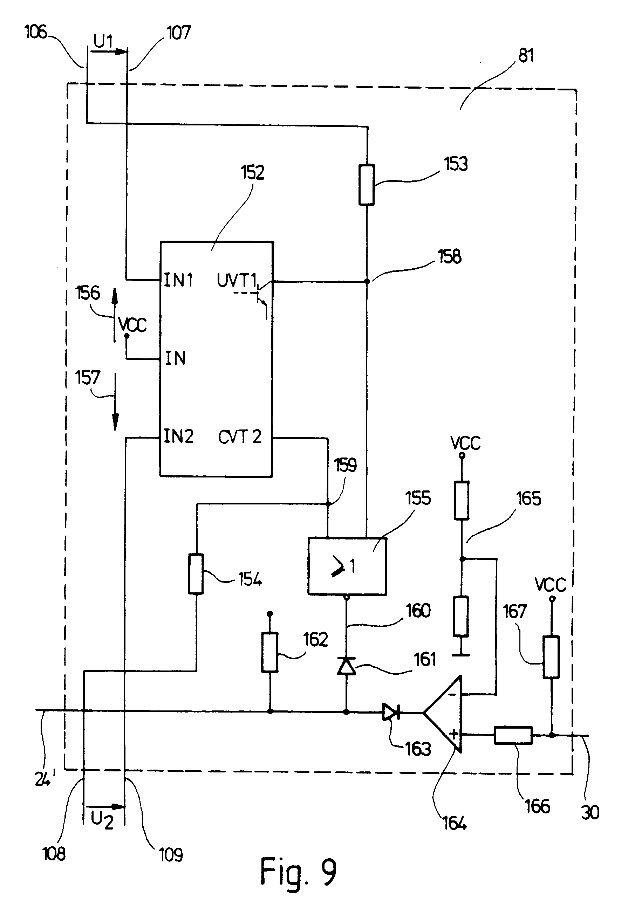

Es ist zu erkennen, daß die Hängererkennungsschaltung 81 die Spannungsabfälle U1 und U2 über den Treiberschaltungen 84' und 84'' abgreift. Anhand der Spannungsabfälle U1, U2 über den Treiberschaltungen 84', 84'' erkennt die Hängererkennungsschaltung 81, ob durch die zugeordneten Lampen 85' ein Strom fließt. Selbst wenn die Hängererkennungsleitung 30 also nicht auf Masse bezogen ist, wodurch normalerweise ein Hänger erkannt wird, kann die Hängererkennungsschaltung 81 anhand der Spannungsabfälle U1, U2 einen Hänger erkennen. Wie dies beispielsweise geschieht, wird jetzt anhand von Fig. 9 beschrieben.

Die Hängererkennungsschaltung 81 weist zunächst eine Komparatorschaltung 152 auf, wie sie beispielsweise unter der Typenbezeichnung U479B und U4790 im Handel erhältlich ist. Über Meßleitungen 107 und 109 sind Ausgänge der Treiberschaltungen 84' und 84'' mit Eingängen IN1 und IN2 der Komparatorschaltung 152 verbunden. Die mit den Eingängen der Treiberschaltungen 84', 84'' verbundenen Meßleitungen 106 und 108 führen über Längswiderstände 153 und 154 zu den zugeordneten Ausgängen OUT1 und OUT2 der Komparatorschaltung 152. Die am Ausgang der jeweiligen Treiberschaltung 84', 84'' anstehende Spannung wird über den Eingang IN mit VCC verglichen. Die so zwischen VCC und den Ausgängen der Treiberschaltungen 84', 84'' gebildeten Differenzen sind bei 146 und 147 durch Pfeile angedeutet.

Die innere Beschaltung der Komparatorschaltung 152 ist derart, daß die Ausgänge OUT1 und OUT2, die Open-Kollektor-Ausgänge sind, nur dann sperren, wenn die Spannungen 156, 157 größer als 8mV sind. In all den anderen Fällen ist der Ausgangstransistor bei OUT1 und OUT2 durchgeschaltet, so daß die Ausgänge OUT1 und OUT2 auf logisch L liegen.

Im folgenden wird die Funktionsweise anhand der Fig. 8 und 9 weiter erläutert. Liegt an der Lampe 85 eine Steuerspannung an, so gelangt diese über die Meßleitung 106 und den Längswiderstand 152 in den Ausgang OUT1 hinein. Ist an den Ausgang der Treiberschaltung 84' eine Lampe 85' des Hängers angeschlossen, so fällt über der Treiberschaltung 84' eine Spannung U1 ab, was dazu führt, daß die Spannung 156 den Ausgangstransistor des Ausganges OUT1 sperrt, so daß der Ausgang OUT1 auf logisch H geht. Ist keine Lampe 85' angeschlossen oder wird die Lampe 85 nicht angesteuert, so bleibt der Ausgang OUT1 auf logisch L. Entsprechendes gilt für Eingang IN2 und Ausgang OUT2. Die beiden Ausgänge OUT1 und OUT2 sind über ihre Verbindungspunkte 158 und 159 mit den Längswiderständen 153 und 154 mit Eingängen eines NUR-Gatters 155 verbunden.

Aufgrund des soeben Erklärten ergibt sich, daß das NOR-Gatter 155 an seinem Ausgang 160 logisch L-Potential führt, wenn zumindest über der Treiberschaltung 84' oder über der Treiberschaltung 84'' eine Spannung U1 bzw. U2 abfällt. An dem Ausgang 160 ist also zu erkennen, ob Lampen 85' von Strom durchflossen sind. Immer dann, wenn zumindest eine Lampe stromdurchflossen ist, ist der Ausgang 160 auf logisch L.

Der Ausgang 160 ist über eine Diode 161 mit der Leitung 24' verbunden, wobei die Diode 161 mit ihrer Anode an die Meldeleitung 24' angeschaltet ist. Über einen Widerstand 162 ist die Leitung 24' ebenfalls mit VCC verbunden, so daß die Leitung 24' nur dann L-Potential führt, wenn beispielsweise der Ausgang 160 auf logisch L ist, wenn also über den Betriebsstrom einer Hängerlampe ein angeschlossener Hänger erkannt wurde.

Fließt jedoch durch keine der Lampen 85' ein Strom, so geht der Ausgang 160 auf logisch H. Um dennoch den angeschlossenen Hänger erkennen zu können, ist über eine weitere Diode 163, die mit ihrer Anode mit der Anode der Diode 161 zusammengeschaltet ist, ein weiterer Operationsverstärker 164 angeschlossen, dessen Ausgang mit der Kathode der Diode 163 verbunden ist. Der invertierende Eingang des Operationsverstärkers 164 wird über einen Spannungsteiler 165 mit einer Spannung versorgt, die deutlich geringer ist als VCC. Der nicht-intervertierende Eingang ist über einen Längswiderstand 166 und einen PULL-UP-Widerstand 167 mit VCC verbunden. Auf den gemeinsamen Verbindungspunkt der Widerstände 166 und 167 führt die Hängererkennungsleitung 30, die immer dann auf logisch L geschaltet ist, wenn ein Hänger eingeschaltet ist. In einem solchen Falle geht der Ausgang des Operationsverstärkers 164 ebenfalls auf logisch L, was über die Diode 163 auf die Leitung 24 weitergegeben wird.

Ist jedoch kein Hänger eingeschaltet, so ist die Hängererkennungsschaltung 30 wegen des PULL-UP-Widerstandes 167 auf logisch H, und über den Operationsverstärker 164 und die Diode 163 nimmt wegen des weiteren PULL-UP-Widerstandes 162 die Meldeleitung 24' ebenfalls den Wert logisch H an. In einem solchen Fall kann nämlich auch der Ausgang 160 des NUN-Gatters 155 nicht auf logisch L gehen, denn wegen der fehlenden Lampen 85' kann es nicht zu einem Spannungsabfall U1 bzw. U2 kommen.

Die Beschaltung mit dem Komparator 152 ermöglicht es nun, auch dann sicher einen Hänger zu erkennen, wenn sämtliche über Dioden 28, 29 abgefragten Lampen 85' des Hängers mit Strom beaufschlagt sind. In diesem Falle führt die Hängererkennungsleitung 30 nämlich H-Potential, wenn kein weiterer Hängererkennungskontakt 83 vorgesehen sein sollte. In diesem Falle sperrt die Diode 163, aber wegen der Spannungsabfälle U1 und U2 geht der Ausgang 160 des NOR-Gatters 155 auf logisch L, was über die Leitung 24' an das UND-Gatter 46 aus den Fig. 2 bis 8 weitergegeben wird.

Durch das Zusammenwirken der soeben beschriebenen Hängererkennungsschaltung 81 und der anhand von Fig. 7 beschriebenen Fehlererkennungsschaltung 44 ist sichergestellt, daß das jeweilige UND-Gatter 46 an seiner Ausgangsleitung 47 nur dann auf H-Potential geht, wenn sowohl ein Hänger elektrisch angeschlossen ist, als auch eine angesteuerte Lampe 17c der Beleuchtungsanlage 14 des Hängers ausgefallen ist. Der Fehlerstrom zur Simulierung eines Fehlerzustandes für die Lampenüberwachungsschaltung 19 wird also nur in diesen Fällen in die Beleuchtungsanlage 10 eingespeist.

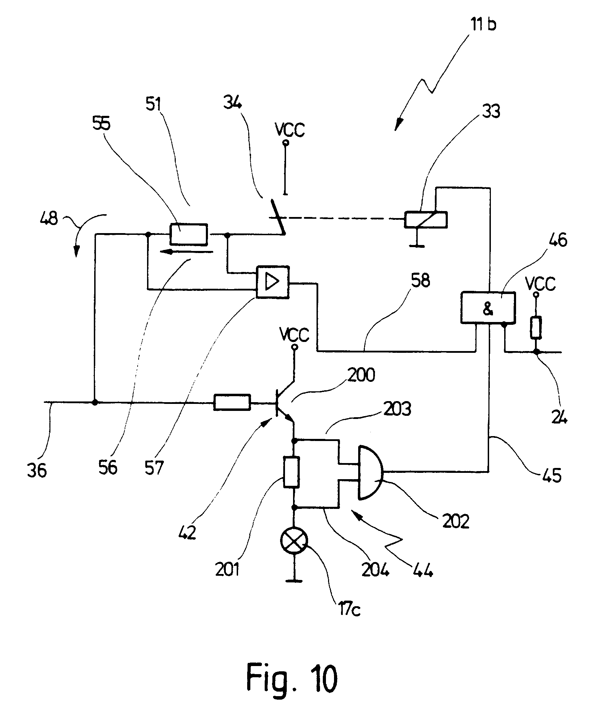

In Fig. 10 ist in einer Darstellung wie Fig. 3 die Baugruppe 11b gezeigt. Im Gegensatz zur Fig. 3 ist hier die Fehlererkennungsschaltung 44 zwischen die Treiberschaltung 42 und die Lampe 17c der Beleuchtungsanlage 14 des Hängers geschaltet.

Die Treiberschaltung 42 umfaßt einen Transistor 200, dessen Kollektor mit VCC und dessen Emitter über einen Längswiderstand 201 mit der Lampe 17c verbunden ist. Die Ansteuerung des Transistors 200 erfolgt über seine Basis, die über einen weiteren Längswiderstand 202 mit der Leitung 36 verbunden ist, die von der Beleuchtungsanlage des Zugfahrzeuges kommt. Die Fehlererkennungsschaltung 44 umfaßt eine Logik-Schaltung 202, welche den Spannungsabfall über dem Widerstand 201 mißt. Die Logik-Schaltung 202 ist mit ihrem Ausgang an die Leitung 45 angeschlossen, welche zu dem UND-Gatter 46 führt.

Wie in Fig. 10 dargestellt, ist die Logik-Schaltung 202 mit ihrem nicht-invertierenden Eingang 203 mit dem Emitter des Transistors 200 und mit ihrem ebenfalls nicht-invertierenden Eingang 204 mit der Lampe 17c verbunden, so daß der Spannungsabfall über dem Widerstand 201 das logische Verhalten der Logik-Schaltung 202 bestimmt. In dem gezeigten Ausführungsbeispiel ist die Logik-Schaltung 202 ein UND-Gatter.

Durch die beschriebene Anordnung gibt die Logik-Schaltung 202 an ihrer Ausgangsleitung 45 immer dann ein H-Signal aus, wenn einerseits der Transistor 200 durchgeschaltet ist, die entsprechenden Lampe der Beleuchtungsanlage 10 des Zugfahrzeuges also eingeschaltet sind, und wenn andererseits die Lampe 17c entweder einen Glühfadenbruch aufweist, oder aber gar nicht vorhanden ist. In dem genannten Fall fließt nämlich durch den Widerstand 201 kein Strom, so daß beide Eingänge 203 und 204 der Logik-Schaltung 202 auf H-Potential liegen.

Wie bereits im Zusammenhang mit Fig. 3 beschrieben, sorgt das UND-Gatter 46 dafür, daß nur dann, wenn ein Hänger angeschaltet ist, was über die Leitung 24 angezeigt wird, auch tatsächlich das Relais 33 anzieht und den Fehlerstrom 48 einspeist.

Zur Vermeidung des bereits oben beschriebenen Selbsthalteeffektes ist der dritte Eingang des UND-Gatters 46 vorgesehen, in den die Fehlererkennungsschaltung 57 einspeist, die wiederum ähnlich wie die Fehlererkennungsschaltung 44 aufgebaut ist. Die Fehlererkennungsschaltung 57 überwacht nämlich den Stromfluß durch den Widerstand 55 und schaltet das Relais 33 ab, wenn hier ein zu großer Spannungsanstieg zu verzeichnen ist, der wiederum darauf beruht, daß die Beleuchtungsanlage 10 des Zugfahrzeuges abgeschaltet wurde, so daß nun auch der Betriebsstrom 49 mit von dem Fehlerstrom 48 geliefert wird.

## Patentansprüche

1. Schaltungsanordnung für ein Zugfahrzeug eines aus dem Zugfahrzeug und einem elektrisch an das Zugfahrzeug anschließbaren Hänger bestehenden Wagenzuges, wobei
- das Zugfahrzeug zumindest eine Lampenüberwachungsschaltung (19) und einen Beleuchtungsschalter (18) zum Betreiben seiner Beleuchtungsanlage (10) aufweist, die über die Schaltungsanordnung (11) mit einer Beleuchtungsanlage (14) des Hängers verbindbar ist;
- die Lampenüberwachungsschaltung (19) den Ausfall einer angesteuerten Lampe (16a, 17a, 16b, 17b) der Beleuchtungsanlage (10) des Zugfahrzeuges als Fehlerzustand erkennt und diesen Fehlerzustand meldet;
- und wobei die Schaltungsanordnung (11) einen Ausfall einer angesteuerten Lampe (16c, 17c) der Beleuchtungsanlage (14) des Hängers erkennt und meldet,
dadurch gekennzeichnet, daß bei Vorliegen eines solchen Ausfalls die Schaltungsanordnung (11) einen von der Lampenüberwachungsschaltung (19) erkennbaren Fehlerzustand hervorruft, die Lampen (16c, 17c) oder Beleuchtungsanlage (14) je über eine zugeordnete Treiberschaltung (42; 84) mit hochohmigem Eingang betrieben werden und die Schaltungsanordnung (11) bei Ausfall einer angesteuerten Lampe (16c, 17c) der Beleuchtungsanlage (14) des Hängers in die von der Lampenüberwachungsschaltung (19) angesteuerten und mit einem Betriebsstrom (49) versorgten entsprechenden Lampen (16a, 16b, 17a, 17b) der Beleuchtungsanlage (10) des Zugfahrzeuges zusätzlich einen Fehlerstrom (48) einspeist.

2. Schaltungsanordnung nach Anspruch 1, dadurch gekennzeichnet, daß der in einer Lampe (16a, 16b, 17a, 17b) fließende Betriebsstrom und der in der selben Lampe (16a, 16b, 17a, 17b) fließende Fehlerstrom (48) etwa die gleiche Größenordnung aufweisen.

3. Schaltungsanordnung nach Anspruch 1 oder 2, dadurch gekennzeichnet, daß sie eine Fehlererkennungsschaltung (44, 61) aufweist, die bei mit der Schaltungsanordnung (11) verbundener Beleuchtungsanlage (14) des Hängers den Ausfall einer Lampe (16c, 17c) der Beleuchtungsanlage (14) erkennt und ein Schaltorgan (32; 33, 62) betätigt, das den Fehlerstrom (48) einspeist.

4. Schaltungsanordnung nach Anspruch 3, dadurch gekennzeichnet, daß das Schaltorgan (32) ein Relais (33) mit einem Schließkontaktpaar (34) ist.

5. Schaltungsanordnung nach Anspruch 3, dadurch gekennzeichnet, daß das Schaltorgan (32) ein Halbleiterschalter (62) ist.

6. Schaltungsanordnung nach einem der Ansprüche 1 bis 5, dadurch gekennzeichnet, daß der Fehlerstrom (48) über eine Widerstandsstrecke (51) in die Lampen (16a, 16b, 17a, 17b) der Beleuchtungsanlage (10) des Zugfahrzeuges eingespeist wird, und daß eine Meßschaltung (57) vorgesehen ist, die über der Widerstandsstrecke (51) einen Spannungsabfall (56) mißt und in Abhängigkeit von dem Spannungsabfall (56) den Fehlerstrom (48) wieder abschaltet.

7. Schaltungsanordnung nach einem der Ansprüche 1 bis 6, dadurch gekennzeichnet, daß sie je Fahrtrichtungsseite mit je einer Baugruppe (11a, 11b) im Strompfad (64) zwischen der vorderen (17a) und der hinteren (17b) Lampe der Beleuchtungsanlage (10) des Zugfahrzeuges liegt und den Fehlerstrom (48) nur in die jeweils hintere Lampe (16b, 17b) einspeist.

8. Schaltungsanordnung nach Anspruch 7, dadurch gekennzeichnet, daß die Baugruppe (11a, 11b) eine Diode (67) umfaßt, die in dem Strompfad (36a, 36b; 64) zwischen der vorderen (16a, 17a) und der hinteren (16b, 17b) Lampe der Beleuchtungsanlage (10) des Zugfahrzeuges liegt.

9. Schaltungsanordnung nach Anspruch 8, dadurch gekennzeichnet, daß der Fehlerstrom (48) an der Kathodenseite (66) der Diode (67) eingespeist wird.

10. Schaltungsanordnung nach einem der Ansprüche 8 oder 9, dadurch gekennzeichnet, daß von der Anodenseite (65) der Diode (66) eine Ansteuerleitung zu der Treiberschaltung (60) führt.

11. Schaltungsanordnung nach Anspruch 3 und einem der Ansprüche 8 oder 9, dadurch gekennzeichnet, daß von der Anodenseite (65) der Diode (66) eine Ansteuerleitung zu dem Schaltorgan (32) führt.

12. Schaltungsanordnung nach einem der Ansprüche 1 bis 11, dadurch gekennzeichnet, daß sie eine Hängererkennungsschaltung (81) aufweist, die eine mit der Schaltungsanordnung (11) verbundene Beleuchtungsanlage (14) eines Hängers erkennt.

13. Schaltungsanordnung nach einem der Ansprüche 1 bis 12, dadurch gekennzeichnet, daß die Treiberschaltungen (42; 84) an ihrem Ausgang kurzschlußfest sind.

14. Schaltungsanordnung nach Anspruch 13, dadurch gekennzeichnet, daß bei mit der Beleuchtungsanlage (10) verbundener Beleuchtungsanlage (14) des Hängers die Hängererkennungsschaltung (81) mit Lampen (85') der Beleuchtungsanlage des Hängers verbunden ist.

15. Schaltungsanordnung nach einem der Ansprüche 12 bis 14, dadurch gekennzeichnet, daß bei mit der Beleuchtungsanlage (10) verbundener Beleuchtungsanlage (14) des Hängers die Hängererkennungsschaltung (81) mit einem Hängererkennungskontakt (83) verbunden ist, der auf Masse liegt.

16. Schaltungsanordnung nach einem der Ansprüche 12 bis 15, dadurch gekennzeichnet, daß die Hängererkennungsschaltung (81) mit ausgewählten Treiberschaltungen (84) verbunden ist, derart, daß sie einen Stromfluß durch die entsprechenden Lampen (85') der Beleuchtungsanlage (14) des Hängers erkennt.

17. Schaltungsanordnung nach einem der Ansprüche 3 bis 16, dadurch gekennzeichnet, daß die Fehlererkennungsschaltung (44) den Spannungsabfall über Lampen (16c, 17c) der Beleuchtungsanlage (14) des Hängers mißt.

18. Schaltungsanordnung nach Anspruch 3 und einem der Ansprüche 12 bis 17, dadurch gekennzeichnet, daß die Fehlererkennungsschaltung (44) und die Hängererkennungsschaltung (81) an ihren Ausgängen über eine Logik-Schaltung (46) miteinander verknüpft sind, wobei die Logik-Schaltung (46) in Abhängigkeit von den Signalen der Fehlererkennungsschaltung (44) und der Hängererkennungsschaltung (81) das Schaltorgan (32) einschaltet.

## Claims

1. Circuit arrangement for a towing vehicle of a vehicle combination consisting of the towing vehicle and a trailer electrically connectable to the towing vehicle,
- the towing vehicle having at least a lamp monitoring circuit (19) and a lighting switch (18) to operate its lighting system (10), which is connectable via the circuit arrangement (11) to a lighting system (14) of the trailer;
- the lamp monitoring circuit (19) recognizing the failure of an activated lamp (16a, 17a, 16b, 17b) of the lighting system (10) of the towing vehicle as a fault state and signalling this fault state;
- and the circuit arrangement (11) detecting and signalling a failure of an activated lamp (16c, 17c) of the lighting system (14) of the trailer,
characterized in that if such a failure is present, the circuit arrangement (11) causes a fault state recognizable by the lamp monitoring circuit (19), the lamps (16c, 17c) or lighting system (14) are each operated via an assigned driver circuit (42; 84) with high-resistance input and in the event of an activated lamp (16c, 17c) of the lighting system (14) of the trailer failing the circuit arrangement (11) in addition feeds a fault current (48) into the corresponding lamps (16a, 16b, 17a, 17b) of the lighting system (10) of the towing vehicle activated and provided with an operating current (49) by the lamp monitoring circuit (19).

2. Circuit arrangement according to claim 1, characterized in that the operating current flowing in a lamp (16a, 16b, 17a, 17b) and the fault current (48) flowing in the same lamp (16a, 16b, 17a, 17b) are of roughly the same magnitude.

3. Circuit arrangement according to claim 1 or 2, characterized in that it has a fault recognition circuit (44, 61), which when the lighting system (14) of the trailer is connected to the circuit arrangement (11) detects the failure of a lamp (16c, 17c) of the lighting system (14) and actuates a switching organ (32; 33, 62), which supplies the fault current (48).

4. Circuit arrangement according to claim 3, characterized in that the switching organ (32) is a relay (33) with a make contact pair (34).

5. Circuit arrangement according to claim 3, characterized in that the switching organ (32) is a semiconductor switch (62).

6. Circuit arrangement according to one of claims 1 to 5, characterized in that the fault current (48) is supplied to the lamps (16a, 16b, 17a, 17b) of the lighting system (10) of the towing vehicle via a resistor link (51), and that a measuring circuit (57) is provided, which measures a voltage drop (56) across the resistor link (51) and disconnects the fault current (48) again depending on the voltage drop (56).

7. Circuit arrangement according to one of claims 1 to 6, characterized in that it is located per travel direction side with one assembly (11a, 11b) in each case in the current path (64) between the front (17a) and the rear (17b) lamp of the lighting system (10) of the towing vehicle and only supplies the fault current (48) to the rear lamp (16b, 17b) in each case.

8. Circuit arrangement according to claim 7, characterized in that the assembly (11a, 11b) includes a diode (67), which lies in the current path (36a, 36b; 64) between the front (16a, 17a) and rear (16b, 17b) lamp of the lighting system (10) of the towing vehicle.

9. Circuit arrangement according to claim 8, characterized in that the fault current (48) is supplied at the cathode side (66) of the diode (67).

10. Circuit arrangement according to one of claims 8 or 9, characterized in that a control lead leads from the anode side (65) of the diode (66) to the driver circuit (60).

11. Circuit arrangement according to claim 3 and one of claims 8 or 9, characterized in that a control lead leads from the anode side (65) of the diode (66) to the switching organ (32).

12. Circuit arrangement according to one of claims 1 to 11, characterized in that it has a trailer recognition circuit (81), which detects a lighting system (14) of a trailer connected to the circuit arrangement (11).

13. Circuit arrangement according to one of claims 1 to 12, characterized in that the driver circuits (42; 84) are short-circuit-proof at their output.

14. Circuit arrangement according to claim 13, characterized in that when the lighting system (14) of the trailer is connected to the lighting system (10), the trailer recognition circuit (81) is connected to lamps (85') of the lighting system of the trailer.

15. Circuit arrangement according to one of claims 12 to 14, characterized in that when the lighting system (14) of the trailer is connected to the lighting system (10), the trailer recognition circuit (81) is connected to a trailer recognition contact (83) which lies at earth.

16. Circuit arrangement according to one of claims 12 to 15, characterized in that the trailer recognition circuit (81) is connected to selected driver circuits (84) such that it detects a current flow through the corresponding lamps (85') of the lighting system (14) of the trailer.

17. Circuit arrangement according to one of claims 3 to 16, characterized in that the fault recognition circuit (44) measures the voltage drop across lamps (16c, 17c) of the lighting system (14) of the trailer.

18. Circuit arrangement according to claim 3 and one of claims 12 to 17, characterized in that the fault recognition circuit (44) and the trailer recognition circuit (81) are linked to one another at their outputs via a logic circuit (46), the logic circuit (46) turning on the switching organ (32) in dependence on the signals of the fault recognition circuit (44) and the trailer recognition circuit (81).

## Revendications

1. Circuit électrique pour un véhicule tracteur d'un ensemble roulant, constitué par le véhicule tracteur et par une remorque pouvant se raccorder électriquement au véhicule tracteur,
- le véhicule tracteur étant équipé d'au moins un circuit de surveillance de lampes (19) et d'un commutateur d'éclairage (18) pour commander son équipement d'éclairage (10) qui peut être relié, par l'intermédiaire du circuit électrique (11), à l'équipement d'éclairage (14) d'une remorque ;
- le circuit de surveillance de lampes (19) détectant la panne d'un feu commandé (16a, 17a, 16b, 17b) de l'équipement d'éclairage (10) du véhicule tracteur comme étant un état de défaut et signalant cet état de défaut ;
- le circuit électrique (11) détectant et signalant une panne d'un feu commandé (16c, 17c) de l'équipement d'éclairage (14) de la remorque,
caractérisé en ce que, en présence d'une panne de ce type, le circuit électrique (11) provoque un état de défaut détectable par le circuit de surveillance de lampes (19), les feux (16c, 17c) de l'équipement d'éclairage (14) fonctionnent par l'intermédiaire d'un circuit d'attaque (42 ; 84) à entrée haute impédance affecté à chacun d'eux et en ce que, en cas de panne d'un feu commandé (16c, 17c) de l'équipement d'éclairage (14) de la remorque, le circuit électrique (11) envoie en plus un courant de défaut (48) dans les feux correspondants (16a, 17a, 16b, 17b) de l'équipement d'éclairage (10) du véhicule tracteur qui sont commandés par le circuit de surveillance de lampes (19) et alimentés par le courant de fonctionnement normal (49).

2. Circuit électrique selon la revendication 1, caractérisé en ce que le courant de fonctionnement normal qui circule dans un feu (16a, 17a, 16b, 17b) et le courant de défaut (48) qui circule dans ce même feu (16a, 17a, 16b, 17b) sont du même ordre de grandeur.

3. Circuit électrique selon l'une des revendications 1 ou 2, caractérisé en ce qu'il comporte un circuit de détection de défaut (44, 61) qui détecte, lorsque l'équipement d'éclairage (14) de la remorque est raccordé au circuit électrique (11), un feu (16c, 17c) défectueux sur l'équipement d'éclairage (14) et actionne un organe de commutation (32 ; 33, 62) pour fournir un courant de défaut (48).

4. Circuit électrique selon la revendication 3, caractérisé en ce que l'organe de commutation (32) est un relais (33) doté d'une paire de contacts à fermeture (34).

5. Circuit électrique selon la revendication 3, caractérisé en ce que l'organe de commutation (32) est un commutateur statique (62).

6. Circuit électrique selon l'une quelconque des revendications 1 à 5, caractérisé en ce que l'alimentation en courant de défaut (48) des feux (16a, 17a, 16b, 17b) de l'équipement d'éclairage (10) du véhicule tracteur s'effectue par l'intermédiaire d'un circuit résistif (51) et en ce qu'il est prévu un circuit de mesure (57) qui mesure la chute de tension (56) aux bornes du circuit résistif (51) et commande la coupure de ce courant de défaut (48) en fonction de la chute de tension (56) mesurée.

7. Circuit électrique selon l'une quelconque des revendications 1 à 6, caractérisé en ce que, pour chaque direction de marche, un module (11a, 11b) est inséré dans la branche de circuit (64) allant du feu avant (17a) au feu arrière (17b) de l'équipement d'éclairage (10) du véhicule tracteur et en ce que le courant de défaut (48) n'alimente que le feu arrière (16b, 17b) correspondant.

8. Circuit électrique selon la revendication 7, caractérisé en ce que le module (11a, 11b) comporte une diode (67), placée dans la branche de circuit (36a, 36b ; 64) entre les feux avant (16a, 17a) et les feux arrière (16b, 17b) de l'équipement d'éclairage (10) du véhicule tracteur.

9. Circuit électrique selon la revendication 8, caractérisé en ce que le courant de défaut (48) est injecté du côté de la cathode (66) de la diode (67).

10. Circuit électrique selon l'une des revendications 8 ou 9, caractérisé en ce qu'un conducteur de commande relie le côté anode (65) de la diode (67) au circuit d'attaque (60).

11. Circuit électrique selon la revendication 3 ou l'une des revendications 8 ou 9, caractérisé en ce qu'un conducteur de commande relie le côté anode (65) de la diode (67) à l'organe de commutation (32).

12. Circuit électrique selon l'une quelconque des revendications 1 à 11, caractérisé en ce qu'il comporte un circuit de détection de remorque (81) qui détecte la présence d'un équipement d'éclairage (14) de remorque raccordé au circuit électrique (11).

13. Circuit électrique selon l'une quelconque des revendications 1 à 12, caractérisé en ce que les circuits d'attaque (42 ; 84) sont protégés en sortie contre les courts-circuits.

14. Circuit électrique selon la revendication 13, caractérisé en ce que, lorsque l'équipement d'éclairage (14) de la remorque est raccordé à l'équipement d'éclairage (10) du véhicule tracteur, le circuit de détection de remorque (81) est raccordé aux feux (85') de l'équipement d'éclairage de la remorque.

15. Circuit électrique selon l'une quelconque des revendications 12 à 14, caractérisé en ce que, lorsque l'équipement d'éclairage (14) de la remorque est raccordé à l'équipement d'éclairage (10) du véhicule tracteur, le circuit de détection de remorque (81) est raccordé à un contact de détection de remorque (83) qui est à la masse.

16. Circuit électrique selon l'une quelconque des revendications 12 à 15, caractérisé en ce que le circuit de détection de remorque (81) est relié à des circuits d'attaque (84) choisis, de telle sorte qu'il détecte une circulation de courant dans les feux correspondants (85') de l'équipement d'éclairage (14) de la remorque.

17. Circuit électrique selon l'une quelconque des revendications 3 à 16, caractérisé en ce que le circuit de détection de défaut (44) mesure la différence de potentiel aux bornes des feux (16c, 17c) de l'équipement d'éclairage (14) de la remorque.

18. Circuit électrique selon la revendication 3 ou l'une quelconque des revendications 12 à 17, caractérisé en ce que les sorties du circuit de détection de défaut (44) et du circuit de détection de remorque (81) sont combinées par un circuit logique (46), le circuit logique (46) commandant l'organe de commutation (32) en fonction des signaux du circuit de détection de défaut (44) et du circuit de détection de remorque (81).
